# EUROPÄISCHE PATENTANMELDUNG

(11) **EP 0 639 545 A1**
(43) Veröffentlichungstag der Anmeldung: **22.02.1995**
(21) Anmeldenummer: 94112698.9
(22) Anmeldetag: 13.08.1994
(51) Int. Cl.: C05G 3/00, A01C 21/00

(54) **Verfahren zur Herstellung von Körpern, insbesondere von körnigem Pflanzendünger mit Langzeit-Düngewirkung sowie Pflanzendünger-Granulat**

(30) Priorität: 18.08.1993 DE 9312332 U; 21.08.1993 DE 9312557 U; 26.01.1994 DE 4402252
(71) Anmelder: VERWALTUNGSGESELLSCHAFT GEIGER TECHNIK GmbH & Co. KG, D-82467 Garmisch-Partenkirchen (DE)
(72) Erfinder: Geiger, Albert, D-82467 Garmisch-Partenkirchen (DE)
(74) Vertreter: Flosdorff, Jürgen, Dr.

(57) **Zusammenfassung**

Das Verfahren zur Herstellung von körnigem Pflanzendünger mit Langzeit-Düngewirkung sieht vor, daß ein vorzugsweise pulverförmiges Düngemittel mit einem biologisch abbaubaren, plastifizierbaren, in Teilchenform vorliegenden Werkstoff vermischt wird, daß das Düngemittel-Werkstoff-Gemisch bevorzugt in einem Extruder erhitzt und plastizifiert und als Strang extrudiert wird, der nach Abkühlung und Erhärtung zu dem erfindungsgemäßen Pflanzendüngergranulat zerkleinert wird. Der Werkstoff ist ein Kunststoff auf der Basis NWR, der in feuchter Erde innerhalb einer durch die Art des Werkstoffs einstellbaren Zeit verrottet und dabei allmählich die eingeschlossenen Düngemittelpartikel freisetzt. Das Verfahren ist mit geringen Kosten verbunden.

## Beschreibung

Die Erfindung betrifft ein Verfahren zur Herstellung von Gegenständen, insbesondere von körnigem Pflanzendünger mit einer Langzeit-Düngewirkung sowie einen Werkstoff mit Langzeit-Düngewirkung und einen Pflanzendünger in Kleinteilchenform, insbesondere in Granulatform. Die "Gegenstände" können z.B. Düngestäbe, Pflanztöpfe etc. sein, ohne daß die Erfindung hierauf beschränkt ist.

Bei der Verwendung von Pflanzendünger besteht das Problem, daß eine Überdüngung unbedingt zu vermeiden ist, da diese das Pflanzenwachstum nicht fördert, sondern im Gegenteil zu einer tiefgreifenden Schädigung der Pflanzen führen kann. Herkömmlicher Pflanzendünger, dessen Wirkstoffe zur sofortigen Aufnahme durch die Pflanzenwurzel freiliegen, sollte daher möglichst stetig in kleiner Dosierung eingebracht werden, beispielsweise in einer im Gießwasser gelösten oder mit Gießwasser vermischten Form. Diese regelmäßige Düngung von Pflanzen hat aber den Nachteil, daß sie mit einem hohen Arbeitsaufwand verbunden ist.

Es ist daher bereits ein Pflanzendünger entwickelt worden, der in körniger Form in die Erde eingebracht wird und über einen längeren Zeitraum allmählich seine Pflanzendünger-Wirkstoffe abgibt. Dieser vorbekannte körnige Pflanzendünger besteht aus einem Pflanzendüngerkern, der mit einer permeablen oder semipermeablen Schicht eingehüllt ist, durch die das Düngemittel hindurchdiffundiert. Der Beschichtungsvorgang, der vermutlich im sogenannten Trommelverfahren erfolgt, ist sehr aufwendig, wodurch dieser Pflanzendünger teuer wird.

Der vorliegenden Erfindung liegt die Aufgabe zugrunde, ein Verfahren zur Herstellung von Gegenständen, insbesondere von Pflanzendünger in Kleinteilform mit einer Langzeit-Düngewirkung anzugeben, das mit einem geringeren Aufwand verbunden ist, wobei zudem der zeitliche Ablauf der Freisetzung des Düngemittels weitgehend einstellbar sein soll. Außerdem soll ein Material mit Langzeit-Düngewirkung und ein körniger oder granulatförmiger Pflanzendünger mit einer einstellbarer Langzeit-Düngewirkung angegeben werden.

Diese Aufgaben werden erfindungsgemäß durch die im Kennzeichen der Patentansprüche 1, 8, 11 und 12 angegebenen Merkmale gelöst. Vorteilhafte Weiterbildungen der Erfindung sind in den abhängigen Ansprüchen gekennzeichnet.

Das erfindungsgemäße Verfahren sieht vor, daß das Düngemittel mit einem biologisch abbaubaren, plastifizierbaren Werkstoff vermischt wird, wobei es sich vorzugsweise um einen Kunststoff auf der Basis NWR (Nachwachsende Rohstoffe) handelt. Ganz allgemein schließt dies natürliche, naturnahe und polymermodifizierte nachwachsende Kunststoffe ein, wobei dem Werkstoff zur Steuerung seiner Verrottungszeit auch chemisch hergestellte Kunststoffe beigemischt sein können. Auch rein chemisch hergestellte Kunststoffe und Recycling-Kunststoff sind einsetzbar. Als Düngemittel kann herkömmlicher Pflanzendünger beispielsweise in flüssiger Form, bevorzugt jedoch in Pulverform verwendet werden, wobei Voraussetzung ist, daß das Düngemittel bei dem ferner vorgesehenen Verfahrensschritt der Erhitzung und Plastifizierung des Düngemittel-Werkstoff-Gemischs nicht zersetzt bzw. unwirksam wird.

Als Beispiel für den verwendeten Werkstoff seien Kunststoffe auf Stärke-, Rizinus- oder Rapsbasis und Polyalkohole und für das Düngemittel Stickstoff, Phosphat, Nitrophosphat und Spurenelemente genannt, wobei das Düngemittel zweckmäßigerweise im Umfang von etwa 1,5 - 50, bevorzugt 1,5 - 5,0 Gewichtsprozent beigemischt wird.

Aus dem erfindungsgemäßen Düngemittel-Werkstoff-Gemisch wird der gewünschte Gegenstand wie z.B. ein Pflanztopf o.dgl. geformt, beispielsweise im Spritzgußverfahren. Es kann auch nach einem weiteren Gesichtspunkt der Erfindung ein Körper grundsätzlich beliebiger Form ausgebracht bzw. gebildet werden, der abkühlt und erhärtet, und der erhärtete Düngemittel-Werkstoff-Körper kann so zerkleinert werden, daß ein in Teilchenform vorliegender Pflanzendünger mit Langzeit-Düngewirkung entsteht.

Der so hergestellte körnige Pflanzendünger besteht somit aus einem in feuchter Erde verrottbaren, biologisch abbaubaren Werkstoff oder Kunststoff, in den weitgehend gleichmäßig verteilt der Düngemittelwirkstoff, bevorzugt in Form kleiner fester Teilchen, eingeschlossen ist. Ein geringer Teil des Düngemittels befindet sich dabei am Außenumfang der Pflanzendüngerteilchen und liegt nach außen frei, so daß dieser Anteil direkt in das Erdreich abgegeben wird. Die in den Werkstoff bzw. Kunststoff eingebetteten Pflanzendüngerpartikel werden erst im Laufe der Verrottung des nachfolgend nur noch als Kunststoff bezeichneten Werkstoffs freigesetzt, wobei die Verrottungszeit durch die Art des verwendeten Materials und durch die Teilchengröße festgelegt werden kann.

Auf diese Weise bildet jedes dieser Pflanzendüngerteilchen ein Düngemitteldepot, aus dem über einen langen Zeitraum weitgehend gleichmäßig Düngemittel-Wirkstoff an das Erdreich abgegeben wird.

Das erfindungsgemäße Verfahren ist insbesondere dann, wenn das Düngemittel-Kunststoff-Gemisch - in einem Extruder erhitzt und plastifiziert und als Strang extrudiert wird, mit geringen Kosten ausführbar. Es wird bevorzugt, daß der erhärtete Düngemittel-Kunststoffstrang zu einem Granulat zerkleinert bzw. geschnitten wird, so daß im folgenden durchgehend von dem erfindungsgemäßen Pflanzendüngergranulat gesprochen wird.

Grundsätzlich liegt es im Rahmen der Erfindung, daß das Düngemittel mit dem Kunststoff in dem Extruder vermischt wird. Hierzu können beide Materialien getrennt in den Extruder eingeführt werden, wobei die Extruderschnecke den Mischvorgang ausführt. Wie bereits erwähnt, ist es zweckmäßig, das Düngemittel in Pulverform einzusetzen, jedoch liegt es auch im Rahmen der Erfindung, Düngemittel in flüssiger Form zu verwenden. Der Kunststoff wird zweckmäßigerweise in Form von Kleinteilen, beispielsweise als Kunststoffgranulat eingesetzt.

Es dürfte jedoch vorteilhafter sein, das Düngemittel und den Kunststoff vor Zuführung in den Extruder miteinander zu vermischen. Dies kann beispielsweise in einem dem Extruder vorgeschalteten Behälter mit einem Rührwerk erfolgen. Um eine gleichmäßige Vermischung zu fördern, können die Kunststoffteilchen mit einem Haftvermittler versehen werden, der beispielsweise auf die Kunststoffteilchen aufgesprüht wird und zur Folge hat, daß Düngemittelpulver an der Außenfläche der Kunststoffteilchen anhaftet.

Wie bereits erwähnt, dürfte es zweckmäßig sein, das Düngemittel in Kleinteilchen- oder Pulverform einzusetzen. Unter der Voraussetzung, daß flüssiger Pflanzendünger durch die Verarbeitungstempertur in dem Extruder, die bevorzugt etwa bei 200° C liegen sollte, nicht zersetzt wird, kann dieser aber beispielsweise auch in der Weise zum Einsatz gelangen, daß er auf das eingesetzte Kunststoffgranulat aufgesprüht wird oder ein Bad für das Kunststoffgranulat bildet, wodurch jedes Kunststoffteilchen an seinem Umfang mit Düngemittel benetzt wird.

In all diesen Fällen läßt sich eine weitgehend gleichmäßige Vermischung der Kunststoffteilchen mit dem Düngemittel erreichen, wobei das Düngemittel in diesem Gemisch nur am Umfang der Kunststoffteilchen (und in den Zwischenräumen zwischen den Kunststoffteilchen) vorhanden ist. In dem Extruder werden die Kunststoffteilchen jedoch geschmolzen, wobei sich die Düngemittelpartikel innerhalb der so gebildeten plastifizierten Masse befinden, die durch die Extruderschnecke wirkungsvoll durchmischt wird, so daß die Düngemittelpartikel weitgehend gleichmäßig in der Kunststoffmasse verteilt werden.

Die Verrottungszeit kann durch Wahl des jeweils geeigneten Kunststoffs festgelegt werden, beispielsweise auf einige Monate, in denen der Düngemittelwirkstoff allmählich an die Umgebung abgegeben wird. Die Freisetzung des Düngemittels kann nicht nur dadurch erfolgen, daß die ein Düngemittelpartikel umgebende Kunststoffmasse verrottet bzw. zerfällt, sondern das Düngemittel kann auch allmählich durch die Kunststoffmasse hindurchdiffundieren, wenn die umgebende Schicht dünn genug ist.

Das in feuchter Erde befindliche Düngemittelgranulat gibt demnach zunächst aus seiner äußeren Schicht und dann mit fortlaufender Verrottung aus stets weiter innen liegenden Bereichen das eingeschlossene Düngemittel ab, das wegen seiner weitgehend gleichmäßigen, auf den gewünschten Wert einstellbaren Dosierung das Pflanzenwachstum fördert, ohne daß eine Überdüngung stattfindet. Das Herstellungsverfahren ist äußerst einfach und kostengünstig. Es liegt im Rahmen der Erfindung, zusätzlich zu dem Düngemittel oder aber anstelle des Düngemittels nach dem erfindungsgemäßen Herstellungsverfahren Insektizide, Pestizide, Fungizide, Herbizide, Wachstumsregulatoren oder bestimmte Nährstoffe in den beschriebenen Werkstoff bzw. Kunststoff einzubetten.

## Patentansprüche

1. Verfahren zur Herstellung von körnigem Pflanzendünger mit Langzeit-Düngewirkung,
**dadurch gekennzeichnet**,
daß Düngemittel mit einem biologisch-abbaubaren, plastizifierbaren Werkstoff vermischt wird,
daß das Düngemittel-Werkstoff-Gemisch erhitzt und plastizifiert wird,
daß ein Körper aus dem Düngemittel-Werkstoff-Gemisch erzeugt wird, der abkühlt und erhärtet,
und daß der erhärtete Düngemittel-Werkstoff-Körper zerkleinert wird.

2. Verfahren nach Anspruch 1,
dadurch gekennzeichnet, daß das Düngemittel-Werkstoff-Gemisch in einem Extruder erhitzt und plastifiziert und als Strang extrudiert wird.

3. Verfahren nach Anspruch 2,
dadurch gekennzeichnet, daß das Düngemittel mit dem Werkstoff in dem Extruder vermischt wird.

4. Verfahren nach Anspruch 2,
dadurch gekennzeichnet, daß das Düngemittel und der Werkstoff vor Zuführung in den Extruder miteinander vermischt werden.

5. Verfahren nach Anspruch 4,
dadurch gekennzeichnet, daß vor dem Vermischen mit dem Düngemittel die Werkstoffteilchen mit einem Haftvermittler versehen werden.

6. Verfahren nach einem der Ansprüche 1 bis 5,
dadurch gekennzeichnet, daß der Werkstoff ein Kunststoff auf der Basis NWR ist.

7. Verfahren nach einem der Ansprüche 1 bis 6,
dadurch gekennzeichnet, daß das Düngemittel ein flüssiger oder teilchenförmiger Pflanzendünger ist.

8. Pflanzendünger mit Langzeit-Düngewirkung,
dadurch gekennzeichnet, daß er ein extrudiertes Gemisch aus einem Düngemittel und einem biologisch abbaubaren, plastizifierbaren Werkstoff aufweist.

9. Pflanzendünger nach Anspruch 8,
dadurch gekennzeichnet, daß der Werkstoff ein Kunststoff auf der Basis NWR ist.

10. Pflanzendünger nach Anspruch 9 oder 10,
dadurch gekennzeichnet, daß er eine Granulatform hat.

11. Verfahren zur Herstellung eines Gegenstandes mit Langzeit-Düngewirkung,
dadurch gekennzeichnet, daß Düngemittel mit einem biologischabbaubaren, plastifizierbaren Werkstoff vermischt wird,
daß das Düngemittel-Werkstoff-Gemisch erhitzt und plastifiziert wird, und
daß ein Gegenstand aus dem Düngemittel-Werkstoff-Gemisch geformt wird, der abkühlt und erhärtet.

12. Werkstoff mit Langzeit-Düngewirkung,
dadurch gekennzeichnet, daß er ein extrudiertes Gemisch aus einem Düngemittel und einem biologisch abbaubaren, plastifizierbaren Kunststoff enthält.

13. Werkstoff nach Anspruch 12,
dadurch gekennzeichnet, daß er zusätzlich oder anstelle des Düngemittels ein Insektizid und/oder Pestizid und/oder Fungizid und/oder Herbizid und/oder Wachstumsregulatoren und/oder Nährstoffe enthält.
